Europäisches Patentamt

European Patent Office

Office européen des brevets

(11) Veröffentlichungsnummer: **0 155 972**

**A1**

(12) # EUROPÄISCHE PATENTANMELDUNG

(21) Anmeldenummer: **84101110.9**

(22) Anmeldetag: **03.02.84**

(51) Int. Cl.⁴: **G 09 B 29/06**

(43) Veröffentlichungstag der Anmeldung:
**02.10.85** Patentblatt **85/40**

(84) Benannte Vertragsstaaten:
**AT BE DE FR GB IT NL SE**

(71) Anmelder: **ELM-Plastic GmbH**
**Phillippsheimer Strasse 15**
**D-5521 Dudeldorf(DE)**

(72) Erfinder: **Lonien, Hans**
**Mettericher Strasse 2**
**D-5521 Dudeldorf(DE)**

(72) Erfinder: **Eichler, Willi**
**Schulstrasse**
**D-5521 Dudelsorf(DE)**

(72) Erfinder: **Möhs, Hans**
**Ringstrasse**
**D-5521 Dudelsdorf(DE)**

(74) Vertreter: **Merten, Fritz**
**Hallerhüttenstrasse 6**
**D-8500 Nürnberg 40(DE)**

(54) **Vorrichtung zum Handhaben von Orientierungsmitteln, wie Landkarten, Strassenkarten u.a.**

(57) Die Erfindung betrifft eine Vorrichtung (1) zum Handhaben von Orientierungsmitteln (4), wie Landkarten, Straßenkarten u.a., wobei das Orientierungsmittel gleichzeitig in der Vorrichtung aufbewahrbar ist, und diese von mindestens zwei mit Abstand voneinander angeordneten Walzen (5, 6) und einem sie aufnehmenden Gehäuse (2, 3) gebildet wird, und das Orientierungsmittel (4) bandförmig ausgeführt ist und an mindestens einer seiner Oberflächen die Orientierungshinweise aufweist, sowie mit seinen Enden an je einer Walze angeschlossen und wechselweise auf diesen Walzen aufrollbar ist, und das Gehäuse mindestens an dessen Abschnitt (9) zwischen den Walzen durchsichtig ausgeführt und die Walzen selbst, insbesondere in ausgeweiteten Kammern (7, 8) drehbar gelagert und mit je einem aus diesen Kammern herausgeführten Drehkörper (15) ausgestattet sind.

Fig.1

EP 0 155 972 A1

0155972

Anmelderin:                    ELM-Plastic GmbH
                               Philippsheimer Str. 15
                               D-5521 Dudeldorf


Vertreter und Zustel-          Fritz Merten
lungsbevollmächtigter:         Patent- und Zivilingenieur
                               Hallerhüttenstr. 6
                               D-8500 Nürnberg - 40

---

Amtliches Aktenzeichen:
Anmelder Nr...........:

Unser Zeichen........:         68.4062    me/sch
Datum................:         14. September 1983

---

T i t e l :        Vorrichtung zum Handhaben von Orientie-
                   rungsmitteln, wie Landkarten, Straßen-
                   karten u.a.


Die Erfindung betrifft eine Vorrichtung zum Handhaben von
Orientierungsmitteln, wie Landkarten, Straßenkarten u.a.,
wobei das Orientierungsmittel gleichzeitig in der Vorrichtung aufbewahrbar ist.

Es ist bekannt, zur Orientierung in der Landschaft, in Städten
oder anderen Gegenden Orientierungsmittel zu verwenden und
diese z.B. in Form von Landkarten, Straßenkarten, Wegweisern
u.a. auszubilden. Orientierungsmittel dieser Art können
dabei auf Papierflächen aufgedruckt sein, oder sie können
aus Leinwand bestehen, wie auch aus Folien, die von Walzen
abgezogen werden und zum Zwecke deren Besichtigung auszubreiten sind. Auch können Orientierungsmittel dieser Art
auf Bildschirmen aufgezeigt sein, die entsprechend der gewünschten Landschaftslage u.a. abgerufen werden können.

Die am häufigsten verwendeten Orientierungsmittel sind dabei in Form von Landkarten oder Straßenkarten ausgebildet, welche durch eine entsprechende Faltung zusammenlegbar sind und bei Bedarf diese ganz oder bereichsweise zur Einsicht freigegeben werden. Landkarten oder Straßenkarten oder selbst Wanderkarten dieser Art haben jedoch den Nachteil, daß sie entsprechend dem Passieren der Gegend durch die das Orientierungsmittel benutzenden Person diese Mittel laufend gefaltet werden müssen, um jeweils den Bereich offenzulegen, in dem man sich gerade befindet oder den man in nächster Zeit passieren möchte. Das Falten und damit wiederholte Suchen des jeweiligen Abschnittes, der zu passieren ist, ist vielfach mit großen Mühen verbunden, dies besonders dann, wenn die nötige Auflagefläche für das Abstützen eines solchen Orientierungsmittels fehlt oder infolge Windeinwirkung oder sonstiger Beeinträchtigungen das Orientierungsmittel nicht einwandfrei abgelesen werden kann. Bei Straßenkarten und auch Wanderkarten wird es auch vielfach als nachteilig angesehen, daß man das Orientierungsmittel nicht griffbereit und entsprechend dem Passieren der Gegend aufschlagen kann, was zur Beeinträchtigung der Fahrweise eines Straßenfahrzeuges oder des Wandervorganges führt, wodurch oft Gefahren heraufbeschworen werden können.

Demgemäß liegt der Erfindung die Aufgabe zugrunde, eine Vorrichtung zum Handhaben von Orientierungsmitteln zu schaffen, die ein schnelles Auffinden des jeweiligen Standortes und der zu passierenden Route gewährleistet und zudem ohne eine aufwendige Handhabung entsprechend der gewählten Route eingestellt wie auch in großen Stückzahlen preisgünstig hergestellt werden kann.

Gemäß der Erfindung wird diese Aufgabe bei einer Vorrichtung der eingangs genannten Art dadurch gelöst, daß die Vorrichtung von mindestens zwei mit Abstand voneinander angeordneten Walzen und einem sie aufnehmenden Gehäuse gebildet wird,
daß das Orientierungsmittel bandförmig ausgeführt ist, und
an mindestens einer seiner Oberflächen die Orientierungshinweise aufweist sowie mit seinen Enden an je einer Walze
angeschlossen und wechselweise auf diesen Walzen aufrollbar
ist, und daß das Gehäuse mindestens an dessen Abschnitt
zwischen den Walzen durchsichtig ausgeführt, und die Walzen
selbst, insbesondere in ausgeweiteten Kammern drehbar gelagert und mit je einem aus diesen Kammern herausgeführten
Drehkörper ausgestattet sind.

Durch diese Maßnahmen wird nicht nur die der Erfindung zugrundeliegende Aufgabe vorteilhaft gelöst, sondern es wird
zudem der Vorteil geschaffen, daß entsprechend dem Fortschritt der passierten Route die Vorrichtung und somit das
Orientierungsmittel in das entsprechende Sichtfeld eingebracht werden kann. Dadurch läßt sich mit nur sehr wenigen
und vor allem sehr einfachen Handgriffen der jeweilige zu
passierende Bereich am Orientierungsmittel einstellen, wodurch Fahrroutenfehler oder sonstige Begehungsfehler weitgehend unterbunden werden. Ein weiterer Vorteil dieser Maßnahmen kann darin gesehen werden, daß die Information und
damit die Einsichtnahme des Orientierungsmittels dadurch
optimal erfolgen kann, als immer nur der Bereich zur Einsicht freigegeben wird, der gerade von Interesse erscheint.
Durch die Rollbarkeit des Orientierungsmittels und die Bewegung desselben am Sichtfenster kann auch der gerade interessierende Abschnitt am Orientierungsmittel leichter gefunden werden. Mit Fortschreiten der Bewegung des zu Informierenden auf seiner Route kann durch weiteres Auf- oder Abrollen des Orientierungsmittels der neue Standort bzw. der
neue zu passierende Bereich eingestellt werden und so fort.
Auf diese Weise ist es möglich, mit einem Blick auf die
Vorrichtung die erforderliche Information des Standortes
zu erhalten, was insbesondere beim Fahren in einem Kraftfahrzeug mit den dort für den Fahrer sich oft einstellenden,
anderen Notwendigkeiten, auf die Aufmerksamkeit sich sehr
vorteilhaft auswirkt.

Weitere vorteilhafte Weiterbildungen der Erfindung können
insbesondere den verbleibenden Unteransprüchen entnommen
werden.

In der Zeichnung ist eines der möglichen Ausführungsbeispiele einer solchen Vorrichtung schematisch dargestellt.
Es zeigt:

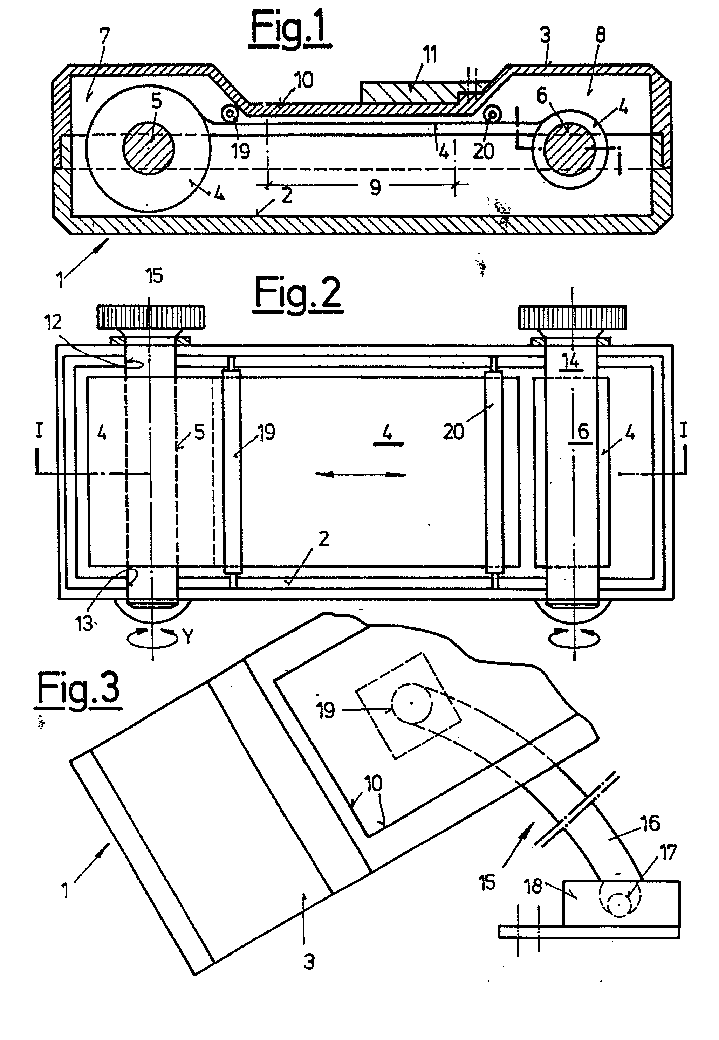

Fig. 1     einen Schnitt durch die Vorrichtung in der Ebene
           I-I in Fig. 2,

Fig. 2     eine Draufsicht auf die Vorrichtung nach Fig. 1,
           jedoch mit abgehobenem Deckel und auf das Orientierungsmittel aufgelegten Umlenkwalzen und

Fig. 3     eine Vorrichtung nach den Fig. 1 und 2, welche
           an einer Halterung angebracht ist.

Die Vorrichtung 1 gemäß der Erfindung wird im wesentlichen
von zwei ein Gehäuse bildenden Halbschalen 2, 3 gebildet,
welche der einfacheren Herstellung wegen gleich oder, wie
hier dargestellt, ungleich ausgeführt sein können und die
durch Aufeinanderlegen und Verschließen das Gehäuse für
das Orientierungsmittel 4 bilden. Das Orientierungsmittel
4, welches im Gehäuse der Vorrichtung 1 bewegbar angeordnet
ist, ist vorzugsweise aus einer Leinwand gebildet, die eine
Landkarte, Straßenkarte, Wanderkarte oder ein sonstiges
Informationsmittel sein kann. Die Leinwand kann dabei bei
kleineren Orientierungsmitteln 4 beispielsweise als ein
Endlosband oder bei größeren als endendes Band ausgeführt
sein, welches mit dessen Enden an je einer Walze 5, 6, die
in der Vorrichtung 1 bzw. im Gehäuse drehbar gelagert ist,
angeklemmt ist. Um den Umfang einerseits der Walzen 5, 6
und andererseits des darauf aufzuwickelnden Orientierungsmittels 4 aufnehmen zu können, sind die Gehäusehälften an
ihren Enden mit erweiteren Kammern 7, 8 versehen, welche im geschlossenen Zustand der Halbschalen 2, 3 von diesen gebildet werden. Zwischen diesen erweiterten Kammern 7, 8 ist eine Förderstrecke 9 am Gehäuse vorgesehen, und es wird diese Förderstrecke von dem Abstand der zueinander stehenden, erweiterten Kammern 7, 8 begrenzt. Im Bereich dieser Förderstrecke 9 ist mindestens an der einen Seite der Vorrichtung 1 bzw. an der einen Gehäusehälfte 3 ein Sichtfenster 10 vorgesehen, wodurch eine Einsicht auf das Orientierungsmittel 4 freigegeben wird. In Fällen, in denen das Orientierungsmittel 4 beidseitig mit den entsprechenden Orientierungsinformationen bedruckt ist, kann ein solches Sichtfenster 10 auch an der anderen Halbschale 2 vorgesehen sein, so daß die Vorrichtung 1 von beiden Seiten die entsprechenden Informationen dem Betrachter zu übermitteln vermag. Entsprechend einer zu nehmenden Fahrroute oder Wanderroute u.a. kann das passende Orientierungsmittel 4 auf die Walzen 5, 6 aufgebracht werden und dann durch entsprechendes Abrollen oder Aufrollen an diesen Walzen solange bewegt werden, bis zum einen der derzeitige Standort ersichtlich wird und davon ausgehend, die Fahrroute bzw. die zu passierende Route ersichtlich bleibt. Mit Fortschreiten des Passierens der Route kann das Orientierungsmittel 4 weiter bewegt werden, so daß der Betrachter immer den Bereich zu sehen bekommt, den er gerade passiert bzw. bereist. Zu diesem Zweck können Orientierungsmittel 4, soweit diese als Straßenkarten verwendet werden, als Längsstreifen der entsprechenden Karte ausgebildet sein, und es können z.B. zwei solcher Längsstreifen bereits einen sehr weiten Bereich der entsprechenden Karte abdecken. In besonderen Fällen, in denen auf beispielsweise zwei Längsstreifen, d.h. einer Vorderseite und einer Rückseite des Orientierungsmittels 4, die gesamte interessierende Landkarte nicht aufgebracht werden kann, ist es möglich, weitere Abschnitte gesonderten Walzen 5, 6 zuzuordnen und diese Abschnitte durch Auswechseln der vorhandenen Walzen dem Betrachter zur Einsicht freizugeben. Analog der Unterteilung einer solchen Landkarte in Längsstreifen kann eine solche auch in Querstreifen vorliegen, so daß bei entsprechendem Passieren, z.B. in Querrichtung der Gegend bzw. des Landstriches, der Querstreifen
eingeschoben werden könnte.

In Fällen, in denen es schwierig sein kann, große Landstriche
auf ein bandförmiges Orientierungsmittel 4 aufzubringen,
kann es von Vorteil sein, dieses sehr klein zu bedrucken
und oberhalb des Sichtfensters 10 oder in das Sichtfenster
selbst eine Lupe 11 anzubringen, mit der der sehr kleine
Abschnitt entsprechend vergrößert werden kann. Dadurch wird
es möglich, auf einer sehr gedrängten Fläche eine sehr weitgehende Orientierungshilfe zu geben, so daß ein solches
Orientierungsmittel 4 selbst den höheren Anforderungen an
Informatik genügen dürfte.

In der hier ausgeführten Darstellung der Vorrichtung 1 ist
diese hantelförmig ausgeführt, d.h. sie ist aus der mittleren Förderstrecke 9 und den endseitig angeordneten Kammern
7, 8 des Gehäuses gebildet. Die Gehäusehälften 2, 3, die
zusammensteckbar oder muschelartig aufklappbar ausgeführt
sein können, können das Orientierungsmittel 4 ausreichend
dicht verschließen, so daß selbst bei Verwendung desselben
in feuchten Bereichen oder gar bei Regen kaum Schwierigkeiten auftreten können. Analog dieser Ausführung sind die
Walzen 5, 6 für das Orientierungsmittel 4 liegend in den
Halbschalen 2, 3 gebettet, und sie sind an Lagerstellen
12, 13 dieser Halbschalen drehbar angeordnet. Um dabei die
Walzen 5, 6 um deren Längsachse Y drehen zu können, sind
deren Stummel 14 aus dem Gehäuse herausgeführt und dort
an einem Drehkörper 15, z.B. einem Handrad, angeschlossen.

In Fällen, in denen statt der schalenförigen Ausbildung
des Gehäuses eine taschenförmige Ausbildung gewählt wird,
ist es denkbar, die Walzen 5, 6 mit dem Orientierungsmittel
4 in die Taschen einzustecken, wobei in einem solchen Fall
die Wellenstummel 14 der Walzen in entsprechenden Lagerstellen eingeführt werden und die nach oben offene Öffnung dieser Tasche mit einem Deckel, der ebenfalls Sackbohrungen als auch Lagerstellen für die Stummel der Walzen aufweist, zu verschließen wäre.

In beiden Fällen ist es auch denkbar, das Gehäuse der Vorrichtung 1 aus einem durchsichtigen Werkstoff, so etwa einem durchsichtigen thermoplastischen Kunststoff, herzustellen, wodurch die Anbringung eines Sichtfensters 10 sich erübrigen dürfte.

Ebenso ist es für besondere Anwendungsfälle möglich, der Vorrichtung 1 eine Halterung 15 zuzuordnen, um beispielsweise diese Vorrichtung in einem Kraftfahrzeug so anzubringen, daß der Fahrer bequem die Vorrichtung bedienen und das Orientierungsmittel 4 einsehen kann. Eine solche Halterung 15 kann in einer einfachen Ausführung beispielsweise aus einem flexiblen Gestänge 16 und einer Grundplatte 17 bestehen, wobei die Grundplatte beispielsweise eine Saugbefestigung für deren Anbringung an der Windschutzscheibe aufweisen kann. Die Grundplatte 17 kann über ein Kugelgelenk 18 mit dem Gestänge 16, und es kann dieses Gestänge über ein weiteres Kugelgelenk 19 mit der Vorrichtung 1 verbunden sein. Haltevorrichtungen dieser Art sind allgemein bekannt, so daß auf eine solche hier nicht weiter eingegangen zu werden braucht.

Die Vorrichtung 1 gemäß der Neuerung wurde anhand des Ausführungsbeispieles als Landkarte, Wanderkarte oder Straßenkarte geschildert. Dies schließt jedoch nicht aus, diese Vorrichtung 1 auch als Stadtkarte zu verwenden, wie dies für Stadtpläne u.a. üblich ist.

Soweit für das Auffinden entsprechender Stadtbezirke oder gar Straßen Informationen beigegeben werden müssen, können diese entweder als Büchlein dem Orientierungsmittel 4 bei-

0155972

gegeben sein, oder sie können durch eine entsprechende andere Kodierung kenntlich gemacht sein.

Analog der bekannten Ausführung von Stadtkarten für verschiedene Städte können auch gleichwertige Vorrichtungen 1 für verschiedene Städte oder sonstige Bereiche gefertigt sein, so daß ein Benutzer die für seine Zwecke geeignete Vorrichtung bzw. das jeweilige Orientierungsmittel 4 erwerben und sich anhand dieses orientieren kann.

Um das Orientierungsmittel 4 im Gehäuse 2, 3 führen zu können, können an mindestens einer Gehäusehälfte, z.B. 3, Umlenkwalzen 20, 21 vorgesehen sein, die ähnlich einer Fotokamera das Orientierungsmittel 4 auf die Walzen 5, 6, wo dieses schneckenförmig aufgewickelt wird, führen.

In besonders gelagerten Fällen kann es von Vorteil sein, das Gehäuse der Vorrichtung 1 taschenförmig auszuführen. In einem solchen Fall sind sackförmige Lagerstellen in den Kammern 7, 8 vorgesehen, in die die Stummeln der Walzen 5, 6 einsteckbar bzw. lagerbar sind.

0155972

Anmelderin:                          ELM-Plastic GmbH
                                     Philippsheimer Str. 15
                                     D-5521 Dudeldorf


Vertreter und Zustel-                Fritz Merten
lungsbevollmächtigter:               Patent- und Zivilingenieur
                                     Hallerhüttenstr. 6
                                     D-8500 Nürnberg - 40


---

Amtliches Aktenzeichen:
Anmelder Nr...........:

Unser Zeichen.........:              68.4062    me/sch
Datum.................:              14. September 1983

---

## P A T E N T A N S P R Ü C H E

1. Vorrichtung zum Handhaben von Orientierungsmitteln, wie
   Landkarten, Straßenkarten u.a., wobei das Orientierungsmittel gleichzeitig in der Vorrichtung aufbewahrbar ist,
   dadurch gekennzeichnet, daß die Vorrichtung (1) von mindestens zwei mit Abstand voneinander angeordneten Walzen
   (5,6) und einem sie aufnehmenden Gehäuse (2,3) gebildet
   wird, daß das Orientierungsmittel (4) bandförmig ausgeführt ist und an mindestens einer seiner Oberflächen
   die Orientierungshinweise aufweist, sowie mit seinen
   Enden an je einer Walze angeschlossen und wechselweise
   auf diesen Walzen aufrollbar ist, und daß das Gehäuse
   mindestens an dessen Abschnitt (9) zwischen den Walzen
   durchsichtig ausgeführt und die Walzen selbst, insbesondere in ausgeweiteten Kammern (7,8) drehbar gelagert
und mit je einem aus diesen Kammern herausgeführten Drehkörper (15) ausgestattet sind.

2. Vorrichtung nach Anspruch 1, dadurch gekennzeichnet,
daß das Gehäuse (2,3), in dessen Längsmittelschnitt gesehen, hantelförmig ausgeführt ist und im Bereich dessen
Übertrittes von dessen Sichtfenster (10) zur jeweiligen
Kammer (7,8) mit mindestens einem Umlenkmittel (19,20)
ausgestattet ist.

3. Vorrichtung nach Anspruch 2, dadurch gekennzeichnet,
daß das Umlenkmittel (19,20) eine stangenförmige Walze
ist.

4. Vorrichtung nach Anspruch 1, dadurch gekennzeichnet,
daß das Gehäuse von zwei Halbschalen (2,3) gebildet wird,
die an einem ihrer Enden gelenkig verbunden und muschelförmig um deren Gelenkstelle öffenbar sind, und daß das
Orientierungsmittel (4) mit dessen Walzen (5,6) in Lagerschalen für diese Walzen einlegbar ist.

5. Vorrichtung nach Anspruch 1, dadurch gekennzeichnet,
daß das Gehäuse taschenförmig ausgeführt ist und die
Walzen (5,6) in sackförmige Lagerstellen der Kammern
(7,8) einlegbar sind, und daß eine zweite Lagerstelle
für jede Walze in einem die Taschenöffnung abdeckenden
Deckel vorgesehen ist.

Fig.1

Fig.2

Fig.3

0155972

1/1

Europäisches
Patentamt

**EUROPÄISCHER RECHERCHENBERICHT**

0155972
Nummer der Anmeldung

EP 84 10 1110

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-2 913 827 (A.P. BETSCHART) <br> * Ansprüche 1,3,4 * | 1 | G 09 B 29/06 |
| X | DE-A-2 926 546 (VEIGEL PHOTOGERÄTE) <br> * Ansprüche 1,3,4 * | 1 | |
| A | DE-A-2 601 202 (R. RÖTTGER) <br> * Anspruch 1 * | 1 | |
| A | DE-B-A 4774 IXb/42n, 19-07-1951 <br> * Anspruch 1 * | 1 | |
| A | GB-A- 951 541 (S.G. CLARK) <br> * Ansprüche 1,5; Figuren * | 2 | |
| A | DE-C- 862 838 (SCHUMACHER & BIELEFELD) <br> * Abbildung 2 * | 3 | **RECHERCHIERTE SACHGEBIETE (Int. Cl.4)** <br><br> G 09 B 29/06 |
| A | US-A-1 396 553 (J.J. BOVY) <br> * Figur 2 * | 4 | |
| A | FR-A-1 013 916 (M.M. PORTALIER) <br> * Figuren 1-4 * | 5 | |
| A | US-A-3 408 757 (D.A. McQUISTION) <br> * Figuren * | | |

Der vorliegende Recherchenbericht wurde für alle Patentansprüche erstellt.

| Recherchenort <br> BERLIN | Abschlußdatum der Recherche <br> 21-05-1985 | Prüfer <br> FUCHS R |
|---|---|---|